# EUROPEAN PATENT APPLICATION

(11) **EP 4 303 988 A1**
(43) Date of publication of application: **10.01.2024**
(21) Application number: 21936751.3
(22) Date of filing: 26.10.2021
(51) Int. Cl.: H01M 50/147, H01M 50/553, H01M 50/15, H01M 50/176, H01M 50/593, H01M 10/058

(54) **BATTERY TOP COVER AND BATTERY**

(30) Priority: 16.04.2021 CN 202110412543
(71) Applicant: Eve Power Co., Ltd., Jingmen Hubei 448000 (CN)
(72) Inventor: WANG, Xianwen, Jingmen, Hubei 448000 (CN); LV, Zhengzhong, Jingmen, Hubei 448000 (CN); YUAN, Dingding, Jingmen, Hubei 448000 (CN)
(74) Representative: HGF
(86) International application number: PCT/CN2021/126261
(87) International publication number: WO 2022/217884

(57) **Abstract**

Provided are a battery top cover and a battery. The battery top cover includes a cover plate, a pressing plate, an insulation assembly and a pole. The cover plate is provided with a mounting hole penetrating through two sides in a thickness direction of the cover plate. The pole is disposed in the mounting hole and is spaced from the cover plate. The pole includes a pole body, a middle of a first end of the pole body is provided with a first mounting groove configured to mount a connection member, and a circumferential portion of the first end of the pole body is provided with a first flange. A free end of the first flange extends towards a direction facing away from an axis of the mounting hole. The pressing plate is sleeved on an end of the pole body facing away from the first flange. The insulation assembly is arranged between the pressing plate and the cover plate and between the first flange and the cover plate to enable the cover plate and the insulation assembly to be clamped between the pressing plate and the first flange.

## Description

The present application claims priority to Chinese Patent Application No. 202110412543.4, filed with the China National Intellectual Property Administration (CNIPA) on Apr. 16, 2021, the disclosure of which is incorporated herein by reference in its entirety.

### TECHNICAL FIELD

The present application relates to the technical field of batteries, for example, to a battery top cover and a battery including the battery top cover.

### BACKGROUND

With the development of new energy sources, there is an increasing market demand for lithium-ion batteries. In the battery industry, a top cover of a battery is generally manufactured by the pole encapsulation injection molding, riveting and other processes. For example, in a relatively common manufacturing process of the top cover, firstly, it is required to assemble and weld the cover plate and multiple parts configured to fix, insulate and isolate the pole, and finally, it is required to perform encapsulation injection molding to realize the protection of pole and the multiple parts. However, the top cover has more parts, a complex structure, and a tedious assembly process, which is not conductive to improving the manufacturing efficiency of the battery.

### SUMMARY

The present application provides a battery top cover and a battery, which are simple in structure, are high in production efficiency, and are low in manufacturing cost.

There is provided a battery top cover. The battery top cover includes a cover plate, a pressing plate, an insulation assembly and a pole. The cover plate is provided with a mounting hole penetrating through two sides in a thickness direction of the cover plate. The pole is disposed in the mounting hole and is spaced from the cover plate. The pole includes a pole body, a middle of a first end of the pole body is provided with a first mounting groove configured to mount a connection member, and a circumferential portion of the first end of the pole body is provided with a first flange. A free end of the first flange extends towards a direction facing away from an axis of the mounting hole. The pressing plate is sleeved on an end of the pole body facing away from the first flange. The insulation assembly is arranged between the pressing plate and the cover plate and between the first flange and the cover plate, and the cover plate and the insulation assembly are clamped between the pressing plate and the first flange.

There is further provided a battery. The battery includes a battery top cover, a cell and a connection member. One end of the connection member is connected to a tab of the cell, and another end of the connection member is connected to a bottom of a first mounting groove of the battery top cover to enable a pole of the battery top cover to be electrically connected to the cell through the connection member. The battery top cover includes a cover plate, a pressing plate, an insulation assembly and the pole. The cover plate is provided with a mounting hole penetrating through two sides in a thickness direction of the cover plate. The pole is disposed in the mounting hole and is spaced from the cover plate. The pole includes a pole body, a middle portion of a first end of the pole body is provided with a first mounting groove configured to mount a connection member, and a circumferential portion of the first end of the pole body is provided with a first flange. A free end of the first flange extends towards a direction facing away from an axis of the mounting hole. The pressing plate is sleeved on an end of the pole body facing away from the first flange. The insulation assembly is arranged between the pressing plate and the cover plate and between the first flange and the cover plate, and the cover plate and the insulation assembly are clamped between the pressing plate and the first flange.

### BRIEF DESCRIPTION OF DRAWINGS

FIG. 1 is an exploded view of a battery top cover according to some embodiments of the present application;
FIG. 2 is a cross-sectional view of a battery top cover according to some embodiments of the present application;
FIG. 3 is an enlarged view of A of FIG. 2;
FIG. 4 is a partial cross-sectional view of a cover plate according to some embodiments of the present application;
FIG. 5 is a schematic view of a pole according to some embodiments of the present application;
FIG. 6 is a schematic view of an insulation member according to some embodiments of the present application; and
FIG. 7 is a schematic view of another insulation member according to some embodiments of the present application.

### Reference list

- 1: cover plate
- 10: mounting hole
- 11: first step surface
- 12: second step surface
- 13: explosion-proof hole
- 14: liquid injection hole
- 2: pressing plate
- 3: insulation member
- 31: first insulation plate
- 32: second insulation plate
- 33: third insulation plate
- 34: second mounting groove
- 35: positioning column
- 4: sealing ring
- 5: pole
- 50: pole body
- 51: first flange
- 52: first mounting groove
- 6: insulation bracket
- 61: avoidance hole
- 62: second flange
- 7: connection member
- 8: protective film

### DETAILED DESCRIPTION

Technical solution of the present application will be described hereinafter in conjunction with drawings and embodiments.

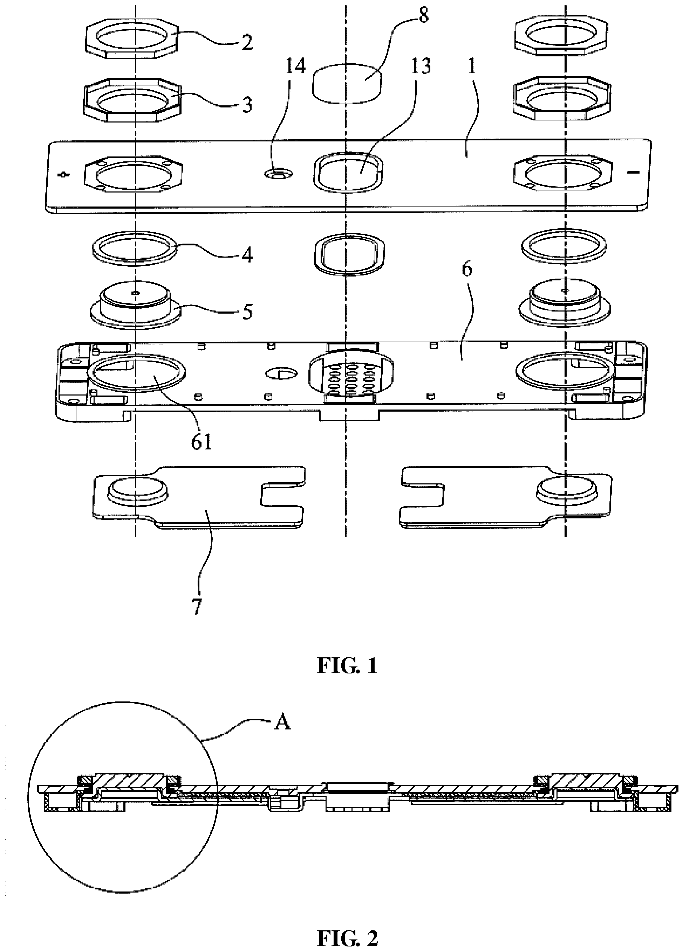

As shown in FIGS. 1 to 7, a battery top cover is provided according to the present application. The battery top cover is mounted on a cell, the cell includes a housing and a core, the housing has a receiving cavity configured to receive the core and an electrolyte, the core is mounted within the receiving cavity, and the battery top cover is mounted at an opening position of the housing and is configured to seal the core and the electrolyte in an interior of the housing. The battery top cover includes a cover plate 1, a pressing plate 2, an insulation assembly, and a pole 5. The cover plate 1 is provided with a mounting hole 10 penetrating through two sides in a thickness direction of the cover plate. The pole 5 is disposed in the mounting hole 10 and is spaced from the cover plate 1. The pole 5 includes a pole body 50, the middle of a first end of the pole body 50 is provided with a first mounting groove 52 configured to mount a connection member 7, and a circumferential portion of the first end of the pole body 50 is provided with a first flange 51. A free end of the first flange 51 extends towards a direction facing away from an axis of the mounting hole 10. The pressing plate 2 is sleeved on an end of the pole body 50 facing away from the first flange 51. The insulation assembly is arranged between the pressing plate 2 and the cover plate 1 and between the first flange 51 and the cover plate 1, and the cover plate 1 and the insulation assembly are clamped between the pressing plate 2 and the first flange 51. The battery top cover is used for sealing the housing of the cell and mounting and fixing the pole 5, the pole 5 is configured to connect the cell to an external device, the pole 5 is connected to a tab on the core through a connection member 7, and an external transmission facility is connected to the pole 5, and the electrical energy transmission of the battery is achieved. In this embodiment, the cover plate 1 is configured to seal and block an opening of the housing, and the receiving cavity configured to mount the core and fill the electrolyte is formed between the housing and the cover plate 1. Moreover, the cover plate 1 is further configured to mount the pole 5, and the electrical connection between the cover plate 1 and the external device is achieved through the pole 5. Two poles 5 are provided, the two poles 5 are a positive pole and a negative pole, respectively, and the positive pole and the negative pole are disposed in a length direction of the cover plate 1 at intervals. Correspondingly, two pressing plates 2 and two insulation assemblies are provided, each of the two pressing plates 2 and each of the two insulation assemblies are simultaneously configured to correspond to one of the two poles 5. The pressing plate 2 and the insulation assembly are configured to fix the pole 5 on the cover plate 1. The pole 5 includes a pole body 50 and a first flange 51, the pole body 50 is provided with a first end and a second end, the first end is opposite to the second end. A first end of the pole body 50 is located a side facing the cell, and the first end of the pole body 50 extends to an interior of the battery and is connected to the cell through the connection member 7. A second end of the pole body 50 is exposed to an exterior of the battery, and the second end of the pole body 50 is connected to the external device. The middle of the first end of the pole body 50 is provided with a first mounting groove 52, and the connection member 7 is configured to be welded and fixed to the bottom of the first mounting groove 52. The first flange 51 is arranged at the circumferential portion of the first end of the pole body 50, that is, the first flange 51 is arranged around the circumferential portion of the first mounting groove 52. The free end of the first flange 51 is an end of the first flange 51 facing away from the pole body 50 and extends in a direction facing away from the axis of the mounting hole 10. An orthographic projection of the first flange 51 on the cover plate 1 is located on the cover plate 1. The pressing plate 2 is a ring-shaped structure, the pressing plate 2 is sleeved on a circumferential portion of the pole 5, and the pressing plate 2 is located at the second end of the pole body 50. The pressing plate 2 is welded and fixed to the pole body 50, and an orthographic projection of at least part of pressing plates 2 on the cover plate 1 is located within the cover plate 1. The first flange 51 is located on a side of the cover plate 1 facing the cell, the pressing plate 2 is located on a side of the cover plate 1 facing away from the cell, and the insulation assemblies are disposed between the pressing plate 2 and the cover plate 1 and between the first flange 51 and the cover plate 1, and the insulation assemblies are used for isolating the pressing plate 2 from the cover plate 1 and isolating the first flange 51 from the cover plate 1. Moreover, the insulation assemblies play a role of sealing and the pole 5 and the cover plate 1 are mounted in a sealed manner. A region of the cover plate 1 adjacent to the mounting hole 10 and the insulation assembly are clamped between the pressing plate 2 and the first flange 51, and the mounting and fixation of the pole 5 and the insulation assembly is achieved. This structure involves fewer parts, which is conductive to simplifying the structure and reducing the cost. Moreover, compared with the fixation of the pole 5 in the encapsulation injection molding manner, it is conductive to simplifying the process and improving the production efficiency.

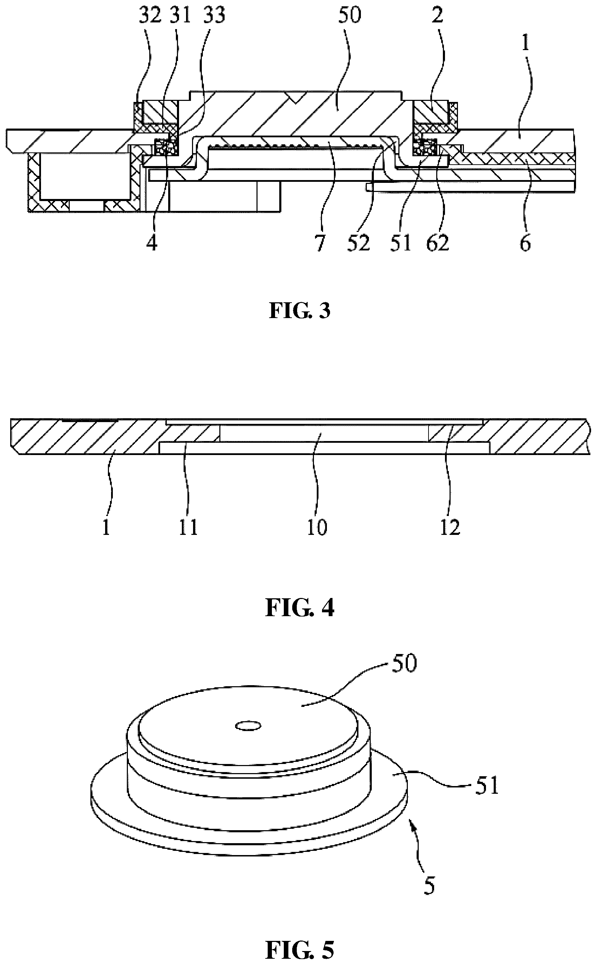

Referring to FIGS. 1 and 3, the insulation assembly includes an insulation member 3 and a sealing ring 4 with elasticity. The insulation member 3 is adjacent to a side of the pressing plate 2, and the sealing ring 4 is adjacent to a side of the first flange 51. In this embodiment, the insulation member 3 is injection molded, the insulation member 3 is mounted on a side of the cover plate 1 facing away from the cell, the insulation member 3 is arranged between the pressing plate 2 and the cover plate 1, and part of the insulation members 3 extend between the pole 5 and a hole wall of the mounting hole 10, thereby providing insulation protection for the pressing plate 2 and the pole 5. The sealing ring 4 is made of an acid-alkali-resistant, high-temperature-resistant elastic material, and the sealing ring 4 has elasticity to ensure the sealing between the pole 5 and the cover plate 1. The sealing ring 4 is mounted on the side of the cover plate 1 facing the cell and is disposed between the first flange 51 and the cover plate 1, and part of the sealing ring 4 extends between the pole 5 and the hole wall of the mounting hole 10, thereby providing the insulation protection and sealing for the first flange 51 and the pole 5.

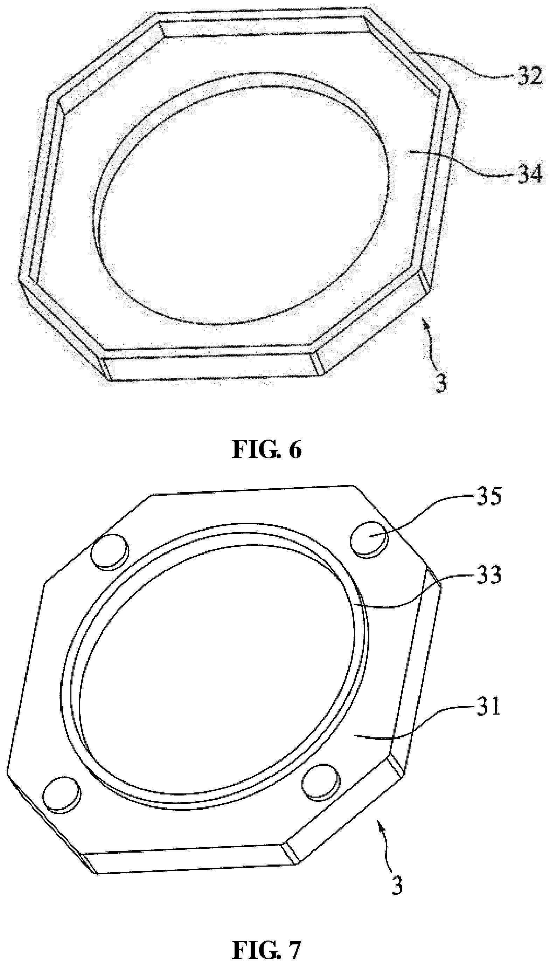

Referring to FIGS. 6 and 7, the insulation member 3 is a ring-shaped structure, and a side wall of an inner ring of the insulation member 3 abuts against the pole 5. The insulation member 3 includes a first insulation plate 31, a second insulation plate 32 arranged on a side wall of an outer ring of the first insulation plate 31, and a third insulation plate 33 arranged on a side wall of an inner ring of the first insulation plate 31. The first insulation plate 31 is located between the pressing plate 2 and the cover plate 1, the third insulation plate 33 is located between the pole body 50 and the hole wall of the mounting hole 10, a second mounting groove 34 is formed between the second insulation plate 32 and the pole body 50, and the second mounting groove 34 is configured to receive the pressing plate 2. In this embodiment, the cross-section of the insulation member 3 is "Z"-shaped, the first insulation member plate 31 abuts against a side of the cover plate 1 facing away from the cell, the second insulation member plate 32 extends towards the cell, the third insulation member plate 33 extends away from the cell, and both the second insulation member plate 32 and the third insulation member plate 33 are perpendicular to the first insulation member plate 31. The second mounting groove 34 is formed between the second insulation plate 32 and the pole body 50, and the pressing plate 2 is mounted within the second mounting groove 34, thereby facilitating the insulation protection of the pressing plate 2 by the insulation member 3 and avoiding the risk of short circuit of the battery caused by the contact between the pressing plate 2 and the cover plate 1.

One of the first insulation plate 31 and the cover plate 1 is provided with a positioning column 35, and another one of the first insulation plate 31 and the cover plate 1 is provided with a positioning groove fitted with the positioning column 35, and the positioning column 35 is inserted into the positioning groove. The positioning column 35 and the positioning groove are respectively arranged on the insulation member 3 and the cover plate 1, thereby facilitating the positioning and mounting of the insulation member 3, and avoiding the rotation of the insulation member 3 relative to the cover plate 1. In this embodiment, the positioning column 35 is arranged on a side of the first insulation plate 31 facing the cover plate 1, and the positioning groove is arranged on the cover plate 1.

In order to improve the mounting stability between the insulation member 3 and the cover plate 1, in a circumferential direction of the first insulation plate 31, multiple positioning columns 35 are arranged on a side of the first insulation plate 31 facing the cover plate 1, and the multiple positioning columns 35 are uniformly distributed.

The first insulation plate 31, the second insulation plate 32, the third insulation plate 33 and the positioning column 35 in the insulation member 3 are integrally injection molded.

In this embodiment, the positive pole and the negative pole are arranged on the cover plate 1 at intervals. Correspondingly, two insulation members 3 and two sealing rings 4 are provided, the two insulation members 3 are a positive insulation member and a negative insulation member, respectively, the two sealing rings 4 are a positive sealing ring and a negative sealing ring, respectively, the positive insulation member and the positive sealing ring are configured to correspond to the positive pole, the negative insulation member and the negative sealing ring are configured to correspond to the negative pole, and conductive particles are embedded within the positive insulation member. The insulation member 3 and the sealing ring 4 are made of an insulation material to enable the pole 5 to be insulated from the cover plate 1. In order to improve the safety of the battery in use, a small amount of conductive particles are added to the positive insulation member to enable the positive pole and the cover plate 1 to conduct, and to be in a weak conductive state.

As shown in FIG. 5, the pole 5 includes the pole body 50 and the first flange 51 located at an end of the pole body 50 facing the cell, an extension direction of the first flange 51 is perpendicular to the axis of the pole body 50, and the pole body 50 and the first flange 51 are integrally formed. In this embodiment, the positive pole is made of aluminum material, the negative pole is made of a copper-aluminum composite material, an end of the negative pole facing the cell is made of copper material, and an end of the negative pole facing away from the cell is made of aluminum material. The pole 5 is in a disc shape with thick middle and thin flange and may be formed by extrusion and stretching.

The sealing ring 4 includes a first sealing portion and a second sealing portion arranged at an included angle. The first sealing portion is located between the first flange 51 and the cover plate 1, the second sealing portion is located between the pole body 50 and the hole wall of the mounting hole 10, and the second sealing portion is configured to abut against the insulation member 3. The sealing ring 4 is an ring structure, and the sealing ring 4 is sleeved on an outer circumferential portion of the pole 5. The cross-section of sealing ring is "L"-shaped, that is, the sealing ring 4 includes a first sealing portion and a second sealing portion arranged perpendicular to each other. The sealing ring 4 is mounted at an opening of the mounting hole 10, the first sealing portion is clamped between the first flange 51 and the cover plate 1, and the second sealing portion is clamped between the pole body 50 and the hole wall of the mounting hole 10. This structure advantageously utilizes the self-shape of the sealing ring 4 for positioning. Moreover, the second sealing portion abuts against the insulation member 3, that is, a gap between the pole 5 and the hole wall of the mounting hole 10 is filled by the insulation member 3 and the sealing ring 4, thereby improving the mounting sealing of the pole 5.

Referring to FIG. 4, the cover plate satisfies at least one of: a first step surface 11 is concavely arranged on a side of the cover plate 1 facing the cell, and the sealing ring 4 abuts against the first step surface 11, and a second step surface 12 is concavely arranged on a side of the cover plate 1 facing away from the cell, and the insulation member 3 abuts against the second step surface 12. In this embodiment, the mounting hole 10 penetrates through the first step surface 11 and the second step surface 12. The first step surface 11 and the second step surface 12 are concavely arranged on two sides of the cover plate 1, respectively, and the sealing ring 4 and the insulation member 3 are arranged on the first step surface 11 and the second step surface 12, respectively, which is conductive to reducing a thickness of the cover plate 1 between the pressing plate 2 and the first flange 51, and further reducing the overall thickness dimension of the pole 5.

In an embodiment, the battery top cover further includes an insulation bracket 6, the insulation bracket 6 is arranged on a side of the cover plate 1 facing the cell, the insulation bracket 6 is provided with an avoidance hole 61 communicating with the mounting hole 10, a hole wall of the avoidance hole 61 is provided with a second flange 62, and a free end of the second flange 62 extends towards an axial direction of the avoidance hole 61 to enable the second flange 62 to be clamped between the first flange 51 and the cover plate 1. In this embodiment, the insulation bracket 6 plays a role of the insulation protection. The avoidance hole 61 is disposed to pass through at the least one of the pole 5 and the connection member 7. The second flange 62 is arranged on the avoidance hole 61 and the second flange 62 is clamped between the first flange 51 and the cover plate 1, and the mounting and fixing of the insulation bracket 6 are achieved, compared to the welding manner in the related art, which is conductive to simplifying the structure and the manufacturing process.

The cover plate 1 is further provided with an explosion-proof valve, and two ends of the explosion-proof valve communicate with the interior of the battery and the exterior of the battery, respectively, and the pressure relief may be performed through the explosion-proof valve in a case of a safety accident of the battery during use, thereby improving the safety in utilization. The cover plate 1 is provided with an explosion-proof hole 13 communicating with the interior of the battery and the exterior of the battery, an outlet end of the explosion-proof valve communicates with the explosion-proof hole 13, a protective film 8 is further arranged on the cover plate 1, and the protective film 8 is configured to selectively seal and block the explosion-proof hole 13. The explosion-proof valve undergoes the pressure relief when the internal pressure of the battery exceeds a set value. Generally, the explosion-proof hole 13 is in a state to be used, and the explosion-proof hole 13 communicates with the exterior of the battery only during the pressure relief to achieve the pressure relief. The protective film 8 is used to cover the explosion-proof hole 13, which is conductive to protecting the explosion-proof hole 13 and preventing external impurities from entering the explosion-proof hole 13. The protective film 8 is made of a low-strength material, or the protective film 8 is adhered to the cover plate 1 by using a low-viscosity adhesive layer, and when the explosion-proof valve is subjected to the pressure relief, the ejected gas or liquid can break the protective film 8 to enable the explosion-proof valve to communicate with the exterior of the battery.

The cover plate 1 is further provided with a liquid injection hole 14. The liquid injection hole 14 is configured to inject the electrolyte into the interior of the housing. The liquid injection hole 14 is sealed and blocked after the injection of the electrolyte is completed.

According to this embodiment, the first mounting groove 52 is arranged in the middle portion of the first end of the pole 5, the first flange 51 is arranged at the circumferential portion of the first end of the pole 5, and the pressing plate 2 is arranged at the second end of the pole 5, and the cover plate 1 and the insulation assembly are clamped between the pressing plate 2 and the first flange 51, and the mounting and fixing of the pole 5 are achieved, which is conductive to reducing a number of parts of the battery top cover and avoiding the encapsulation injection molding of the battery top cover, and has the characteristics of simple structure, simplified manufacturing process and low manufacturing cost. Meanwhile, the first mounting groove 52, which is configured to mount the connection member 7, is arranged in the middle portion of the first end of the pole 5, and the connection member 7 is welded within the first mounting groove 52, thereby avoiding the heat influence on the insulation assembly located at the circumferential portion of the pole 5 during welding. Moreover, the first mounting groove 52 configured to mount the connection member 7 is arranged at the first end of the pole 5, and the mounting space between the pole 5 and the cell is increased.

There is further provided a battery including the battery top cover described above. The battery further includes a cell and a connection member 7. One end of the connection member 7 is connected to a tab of the cell, and another end of the connection member 7 is connected to a bottom of the first mounting groove 52, and the pole 5 is electrically connected to the cell through the connection member 7. In this embodiment, the connection member 7 is welded to the bottom of the first mounting groove 52, which is conductive to keeping the welding position away from the sealing ring 4 sleeved on the circumferential portion of the pole 5, and avoiding the heat effect on the sealing ring 4 during welding. Moreover, the mounting space between the pole 5 and the cell is increased, and the welding operation is facilitated.

The battery was manufactured as follows. In a first step, the cover plate 1, the pressing plate 2, the insulation member 3, the sealing ring 4, the pole 5 and the insulation bracket 6 are formed separately. The cover plate 1 is formed by sheet stamping forming, the insulation member 3 is formed by injection molding, and the pole 5 is formed by extrude-stretch foming. In a second step, the cover plate 1, the pressing plate 2, the insulation member 3, the sealing ring 4, the pole 5 and the insulation bracket 6 are assembled, the pole 5 is passed through the mounting hole 10, and the first flange 51 is located on the side of the cover plate 1 facing the cell. The pressing plate 2 is sleeved on an end of the pole 5 facing away from the cell, the insulation member 3 is clamped between the pressing plate 2 and the cover plate 1, the sealing ring 4 is clamped between the first flange 51 and the cover plate 1, and the second flange 62 of the insulation bracket 6 is clamped between the first flange 51 and the cover plate 1. In a third step, the pressure is applied to the pressing plate 2 to enable the insulation member 3, the sealing ring 4, the second flange 62 and the cover plate 1 to be clamped between the pressing plate 2 and the first flange 51, and then the pressing plate 2 and the pole 5 are welded to fix the pressing plate 2. In a fourth step, a top end of the battery is connected to the core through the connection member 7, the core is inserted into the interior of the housing, and the cover plate 1 and the housing are welded, and the cover plate 1 of the battery is fixed to the cell.

## Claims

1. A battery top cover, comprising a cover plate, a pressing plate, an insulation assembly and a pole, wherein the cover plate is provided with a mounting hole penetrating through two sides in a thickness direction of the cover plate, the pole is disposed in the mounting hole and is spaced from the cover plate, the pole comprises a pole body, a middle of a first end of the pole body is provided with a first mounting groove configured to mount a connection member, a circumferential portion of the first end of the pole body is provided with a first flange, a free end of the first flange extends towards a direction facing away from an axis of the mounting hole, the pressing plate is sleeved on an end of the pole body facing away from the first flange, and the insulation assembly is arranged between the pressing plate and the cover plate and between the first flange and the cover plate to enable the cover plate and the insulation assembly to be clamped between the pressing plate and the first flange.

2. The battery top cover of claim 1, wherein the insulation assembly comprises an insulation member and a sealing ring with elasticity, the insulation member is adjacent to a side of the pressing plate, and the sealing ring is adjacent to a side of the first flange.

3. The battery top cover of claim 2, wherein the insulation member is a ring-shaped structure, the insulation member comprises a first insulation plate, a second insulation plate arranged on a side wall of an outer ring of the first insulation plate, and a third insulation plate arranged on a side wall of an inner ring of the first insulation plate, the first insulation plate is located between the pressing plate and the cover plate, the third insulation plate is located between the pole body and a hole wall of the mounting hole, and a second mounting groove configured to receive the pressing plate is formed between the second insulation plate and the pole body.

4. The battery top cover of claim 3, wherein one of the first insulation plate and the cover plate is provided with a positioning column, another one of the first insulation plate and the cover plate is provided with a positioning groove fitted with the positioning column, and the positioning column is inserted into the positioning groove.

5. The battery top cover of claim 4, wherein along a circumferential direction of the first insulation plate, a plurality of positioning columns are arranged on a side of the first insulation plate facing the cover plate.

6. The battery top cover of claim 2, wherein the sealing ring comprises a first sealing portion and a second sealing portion, the first sealing portion and the second sealing portion are arranged at an included angle, the first sealing portion is located between the first flange and the cover plate, the second sealing portion is located between the pole body and a hole wall of the mounting hole, and the second sealing portion is configured to abut against the insulation member.

7. The battery top cover of claim 3, wherein the sealing ring comprises a first sealing portion and a second sealing portion, the first sealing portion and the second sealing portion are arranged at an included angle, the first sealing portion is located between the first flange and the cover plate, the second sealing portion is located between the pole body and the hole wall of the mounting hole, and the second sealing portion is configured to abut against the insulation member.

8. The battery top cover of claim 2, wherein the cover plate satisfies at least one of:
a first step surface is concavely arranged on a side of the cover plate facing a cell, and the sealing ring abuts against the first step surface; or
a second step surface is concavely arranged on a side of the cover plate facing away from the cell, and the insulation member abuts against the second step surface.

9. The battery top cover of claim 3, wherein the cover plate satisfies at least one of:
a first step surface is concavely arranged on a side of the cover plate facing a cell, and the sealing ring abuts against the first step surface; or
a second step surface is concavely arranged on a side of the cover plate facing away from the cell, and the insulation member abuts against the second step surface.

10. The battery top cover of claim 2, wherein two poles are provided, the two poles are a positive pole and a negative pole, respectively; two insulation members are provided, the two insulation members are a positive insulation member and a negative insulation member, respectively; the positive insulation member is configured to correspond to the positive pole, the negative insulation member is configured to correspond to the negative pole, and conductive particles are embedded within the positive insulation member.

11. The battery top cover of claim 3, wherein two poles are provided, the two poles are a positive pole and a negative pole, respectively; two insulation members are provided, the two insulation members are a positive insulation member and a negative insulation member, respectively; the positive insulation member is configured to correspond to the positive pole, the negative insulation member is configured to correspond to the negative pole, and conductive particles are embedded within the positive insulation member.

12. The battery top cover of claim 10, wherein the insulation member is injection molded.

13. The battery top cover of claim 1, further comprising an insulation bracket, wherein the insulation bracket is arranged on a side of the cover plate facing a cell and is provided with an avoidance hole communicating with the mounting hole, a hole wall of the avoidance hole is provided with a second flange, and a free end of the second flange extends towards an axial direction of the avoidance hole to enable the second flange to be clamped between the first flange and the cover plate.

14. The battery top cover of claim 1, wherein the pole body and the first flange are integrally formed.

15. A battery, comprising a battery top cover, a cell and a connection member, wherein one end of the connection member is connected to a tab of the cell, and another end of the connection member is connected to a bottom of a first mounting groove of the battery top cover to enable a pole of the battery top cover to be electrically connected to the cell through the connection member, the battery top cover comprises a cover plate, a pressing plate, an insulation assembly and the pole, the cover plate is provided with a mounting hole penetrating through two sides in a thickness direction of the cover plate, the pole is disposed in the mounting hole and is spaced from the cover plate, the pole comprises a pole body, the first mounting groove configured to mount the connection member is disposed on a middle portion of a first end of the pole body, a circumferential portion of the first end of the pole body is provided with a first flange, a free end of the first flange extends towards a direction facing away from an axis of the mounting hole, the pressing plate is sleeved on an end of the pole body facing away from the first flange, and the insulation assembly is arranged between the pressing plate and the cover plate and between the first flange and the cover plate to enable the cover plate and the insulation assembly to be clamped between the pressing plate and the first flange.

16. The battery of claim 15, wherein the insulation assembly comprises an insulation member and a sealing ring with elasticity, the insulation member is adjacent to a side of the pressing plate, and the sealing ring is adjacent to a side of the first flange.

17. The battery of claim 16, wherein the insulation member is a ring-shaped structure, the insulation member comprises a first insulation plate, a second insulation plate arranged on a side wall of an outer ring of the first insulation plate, and a third insulation plate arranged on a side wall of an inner ring of the first insulation plate, the first insulation plate is located between the pressing plate and the cover plate, the third insulation plate is located between the pole body and a hole wall of the mounting hole, and a second mounting groove configured to receive the pressing plate is formed between the second insulation plate and the pole body.

18. The battery of claim 17, wherein one of the first insulation plate and the cover plate is provided with a positioning column, another one of the first insulation plate and the cover plate is provided with a positioning groove fitted with the positioning column, and the positioning column is inserted into the positioning groove.

19. The battery of claim 18, wherein in a circumferential direction of the first insulation plate, a plurality of positioning columns are arranged on a side of the first insulation plate facing the cover plate.

20. The battery of claim 16, wherein the sealing ring comprises a first sealing portion and a second sealing portion, the first sealing portion and the second sealing portion are arranged at an included angle, the first sealing portion is located between the first flange and the cover plate, the second sealing portion is located between the pole body and a hole wall of the mounting hole, and the second sealing portion is configured to abut against the insulation member.
